# EUROPEAN PATENT SPECIFICATION

(11) **EP 3 015 355 B1**
(45) Date of publication and mention of the grant of the patent: **03.10.2018**
(21) Application number: 15191143.5
(22) Date of filing: 23.10.2015
(51) Int. Cl.: B62M 7/04

(54) **ENGINE AND MOTORCYCLE INCLUDING THE SAME**
MOTOR UND MOTORRAD DAMIT
MOTEUR ET MOTOCYCLETTE COMPORTANT CELUI-CI

(30) Priority: 31.10.2014 JP 2014222164
(43) Date of publication of application: 04.05.2016
(73) Proprietor: Yamaha Hatsudoki Kabushiki Kaisha, Iwata-shi, Shizuoka 438-8501 (JP)
(72) Inventor: KATO, Shuji, Iwata-shi, Shizuoka 438-8501 (JP); SHIRAISHI, Shinji, Iwata-shi, Shizuoka 438-8501 (JP)
(74) Representative: Grünecker Patent- und Rechtsanwälte PartG mbB

(56) References cited:
- EP-A2- 0 968 910
- EP-A2- 2 581 566
- CN-U- 202 756 050
- DE-A1-102013 217 913
- DE-C- 844 370
- JP-A- 2011 085 028
- JP-U- 3 160 168
- US-A- 4 392 464

## Description

The present invention relates to an engine and a motorcycle including the engine.

In an engine of a motorcycle, crank journals of a crankshaft are rotatably supported at a crankcase by bearings. Further, a crank pin of the crankshaft is coupled to a large end portion of a connecting rod via the bearing. Oil is supplied to the crankshaft for lubrication between these bearings and the crankshaft.

In an engine described in JP 2010-38359 A, a plurality of oil flow paths are formed inside of the crankshaft. Each oil flow path is formed inside of a crank pin and a crank journal that are adjacent to each other. Further, each oil flow path has an opening into an outer peripheral surface of the crank pin and has an opening into an outer peripheral surface of the crank journal. Oil is supplied from the opening of the outer peripheral surface of the crank journal to the above-mentioned oil flow path, so that the supplied oil is led to the opening of the outer peripheral surface of the crank pin. Thus, oil is supplied to a bearing between the crank pin and a connecting rod.

As described above, when oil is supplied to inside of the crankshaft from the outer peripheral surface of the crankshaft, it is necessary to supply oil at a high pressure due to a centrifugal force by rotation of the crankshaft. Therefore, the size of a pump for supplying oil increases, and the size of an engine increases.

In contrast, when oil is introduced to inside of the crankshaft from an end surface of the crankshaft, it is not necessary to supply oil at a high pressure. It is considered that an oil passage is provided inside of the crankcase to supply oil to the inside of the crankshaft from the end surface of the crankshaft. However, a large number of members are provided in the crankcase. Therefore, the oil flow path is complicated in order to avoid interference with these members. As a result, a pressure loss generated in the oil flowing in the oil flow paths increases. Therefore, it is difficult to reduce the size of the pump even with such a configuration.

If each of the oil flow paths can be provided outside of the crankcase using a rubber pipe, the shape of the oil flow path can be simplified. Thus, a pressure loss during the oil supply can be reduced. The rubber pipe is flexible. Therefore, even when an outlet port for leading oil to the outside of the crankcase from the inside of the crankcase and an inlet port for leading oil to the inside of the crankcase from the outside of the crankcase are directed in different directions, attachment to the crankcase is easy. However, it is necessary to increase the thickness of the rubber pipe in order to acquire sufficient strength depends of the pressure in the oil flow path.

In the motorcycle used for races and the like, it is required to largely ensure an allowable bank angle in order to realize stable turning during travelling at a high speed. When the above-mentioned rubber pipe is provided on the side of the crankcase, the allowable bank angle during turning is limited by the thickness of the rubber pipe.

It is considered that the oil flow path is provided outside of the crankcase by using a metal pipe instead of the rubber pipe. However, as described above, when the outlet port and the inlet port provided at the crankcase are directed in different directions, it is difficult to attach the metal pipe to the crankcase.

DE 10 2013 217 913 A1 discloses a lubrication structure having oil channels for supplying oil from a crankcase to the shaft end of the crankshaft via a side cover. A hollow support shaft is arranged between the crankcase and the side cover in order to hold the rotational elements on the outer circumference of the support shaft and to connect the oil channels with each other in their interior.

An object of the present invention is to provide an engine in which an increase in size can be inhibited, assembly can be facilitated and a limit of a bank angle can be eased, and a motorcycle including the engine.

An engine according to one aspect of the present invention, which invention is defined by claim 1, includes a crankcase having a sidewall in which a first attachment hole is formed, a crankshaft supported by the crankcase, a cover member having a second attachment hole and provided at part of the sidewall, an oil flow path that leads oil to the first attachment hole in the crankcase, a first metal pipe having first and second end portions, and a second metal pipe having third and fourth end portions, wherein a first flange portion is provided at the second end portion of the first metal pipe, a second flange portion is provided at the fourth end portion of the second metal pipe, the first attachment hole and the second attachment hole are directed in different directions, the first end portion of the first metal pipe is inserted into the first attachment hole from outside of the crankcase, and the third end portion of the second metal pipe is inserted into the second attachment hole from outside of the crankcase, an end surface of the first flange portion and an end surface of the second flange portion are joined to each other such that the second end portion of the first metal pipe and the fourth end portion of the second metal pipe are coupled to each other, and the crankshaft has an end surface opposite to the cover member, an axis flow path having an end opening at the end surface is formed inside of the crankshaft, and the end opening is arranged such that oil led from the second attachment hole is injected into the end opening.

In the engine, oil is led to the first attachment hole in the crankcase by the oil flow path. The oil led to the first attachment hole is led to the second attachment hole of the cover member through the first and second metal pipes. The oil led to the second attachment hole is injected into the end surface opening of the crankshaft supported by the crankcase and is supplied to the axial flow path inside of the crankshaft.

In this case, a centrifugal force is not exerted on the oil injected into the end surface opening of the crankshaft. Therefore, an injection pressure of oil into the axis flow path can be reduced. Further, because the first and second metal pipes are provided outside of the crankcase, the flow path of oil is not complicated. Therefore, a pressure loss generated in the oil flowing in the flow path can be reduced. Therefore, the size of the pump that supplies oil to the axis flow path of the crankshaft from the oil flow path can be reduced, and the size of the crankcase can be reduced.

In the above-mentioned configuration, with the first and third end portions respectively being inserted into the first and second attachment holes, the first and second flange portions can be respectively easily positioned such that the end surface of the first flange portion and the end surface of the second flange portion are opposite to each other. Therefore, the first and second metal pipes can be easily attached to the crankcase.

Further, the first and second metal pipes have sufficient strength with respect to the pressure of oil. Therefore, it is not necessary to increase the thickness of the first and second metal pipes. Therefore, when the engine is provided in the motorcycle such that the sidewall of the crankcase is directed rightward or leftward of the vehicle, the limit of the bank angle by the first and second metal pipes is reduced.

As a result, an increase in size of the engine can be inhibited, the assembly can be facilitated, and the limit of the bank angle can be eased.

Each of the first and second metal pipes may be provided to pass outside of the sidewall such that a gap between the sidewall of the crankcase and each of the first and second metal pipes is formed, and an elastic member may be provided at at least part of the gap.

In this case, vibration transmitted from the crankcase to the first and second metal pipes is buffered by the elastic member. Thus, a stress exerted on the first and second metal pipes due to the vibration is reduced.

The first flange portion of the first metal pipe and the second flange portion of the second metal pipe may be fixed to the sidewall of the crankcase.

In this case, both of the first and second end portions of the first metal pipe is fixed to the sidewall of the crankcase, and both of the third and fourth end portions of the second metal pipe is fixed to the sidewall of the crankcase. Thus, an attachment state of each of the first and second metal pipe is stabilized.

The first and second metal pipes may be formed of aluminum. Thus, a reduction in weight of the engine is realized.

A first seal member may be provided between the first end portion of the first metal pipe and an inner surface of the first attachment hole, and a second seal member may be provided between the third end portion of the second metal pipe and an inner surface of the second attachment hole.

Thus, liquid-tightness between the first end portion and the inner surface of the first attachment hole, and liquid-tightness between the third end portion and the inner surface of the second attachment hole can be easily ensured.

A third seal member may be provided between an end surface of the first flange portion and an end surface of the second flange portion.

Thus, liquid-tightness can be easily ensured in a joint portion between the end surface of the first flange portion and the end surface of the second flange portion.

A motorcycle according to another aspect of the present invention includes a drive wheel, and the above-mentioned engine that generates motive power for rotating the drive wheel.

The motorcycle includes the above-mentioned engine, so that an increase in size is inhibited, facilitation of the assembly is realized, and travelling at a larger bank angle becomes possible.
Fig. 1 is a side view of one side of a motorcycle according to one embodiment of the present invention;
Fig. 2 is a right side view of a multi-cylinder engine of Fig. 1;
Fig. 3 is a front view of the multi-cylinder engine of Fig. 1;
Fig. 4 is a schematic diagram showing part of an oil flow path provided in the multi-cylinder engine;
Fig. 5 is a perspective view of a crankcase as obliquely viewed from the right front;
Fig. 6 is an external perspective view of a first metal pipe of Fig. 4;
Fig. 7 is an external perspective view of a second metal pipe of Fig. 4;
Fig. 8 is a partially enlarged right side view of the multi-cylinder engine of Fig. 1; and
Fig. 9 is a partially enlarged front view of the multi-cylinder engine of Fig. 1.

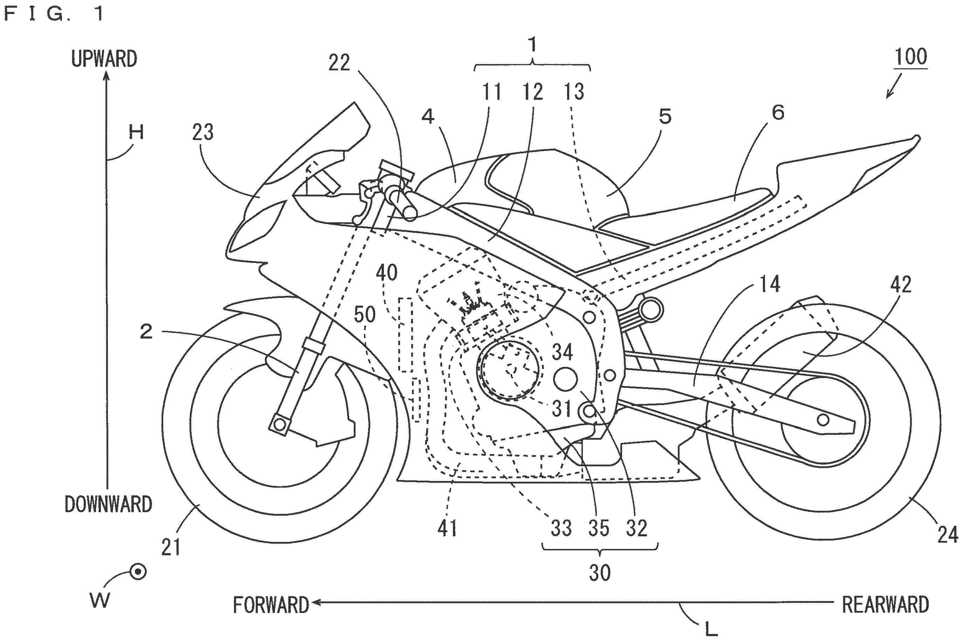

Fig. 1 is a side view of one side of the motorcycle according to one embodiment of the present invention. In Fig. 1, the motorcycle 100 standing up to be perpendicular to the road surface is shown. In Figs. 1 and subsequent given diagrams, a front-and-rear direction L, a left-and-right direction W and a top-and-bottom direction H of the motorcycle 100 are suitably indicated by arrows according to the explanation.

In the following description, a direction in which the arrow is directed in the front-and-rear direction L is referred to as forward, and its opposite direction is referred to as rearward. Further, a direction in which the arrow is directed in the left-and-right direction W is referred to as leftward, and its opposite direction is referred to as rightward. Further, a direction in which the arrow is directed in the top-and-bottom direction H is referred to as upward, and its opposite direction is referred to as downward.

As shown in Fig. 1, the motorcycle 100 includes a vehicle body frame 1. The vehicle body frame 1 includes a head pipe 11, a main frame 12 and a sub-frame 13. The main frame 12 obliquely extends rearward and downward from the head pipe 11. The rear end of the main frame 12 is curved downward. The sub-frame 13 extends rearward from rear ends of upper portions of the pair of main frames 12.

A front fork 2 is provided at the head pipe 11 to be swingable in the left-and-right direction W. A front wheel 21 is rotatably supported at the lower end of the front fork 2. A pair of left and right handles 22 is provided at the upper end of the front fork 2.

A vehicle body cover 23 is provided to cover the head pipe 11 from the front and to cover part of the front fork 2 from the left and the right. The vehicle body cover 23 is attached to the vehicle body frame 1.

A multi-cylinder engine 30 is provided below the main frame 12. The multi-cylinder engine 30 includes a crankshaft 31, a crankcase 32, a cylinder body 33, a cylinder head 34 and an oil pan 35, and is supported at the main frame 12. The multi-cylinder engine 30 of the present example is a water-cooled straight four-cylinder engine. A radiator 40 and an oil cooler 50 are arranged in front of the multi-cylinder engine 30.

Upstream ends of a plurality (four in the present example) of exhaust pipes 41 are connected to the cylinder head 34. Each of the plurality of the exhaust pipes 41 passes in front of the crankcase 32 and below the crankcase 32 from the cylinder head 34 to extend rearward. A muffler (a silencer) 42 is connected to the downstream end of each exhaust pipe 41.

An air cleaner 4 is supported above the multi-cylinder engine 30 by the head pipe 11 and the main frame 12. A fuel tank 5 is supported behind the air cleaner 4 by the main frame 12. Further, a seat 6 is supported behind the fuel tank 5 by the sub-frame 13. A swing arm 14 is provided to extend rearward from the center of the rear end of the main frame 12. A rear wheel 24 is rotatably supported at a rear end of the swing arm 14. The rear wheel 24 is rotated by motive power generated from the multi-cylinder engine 30.

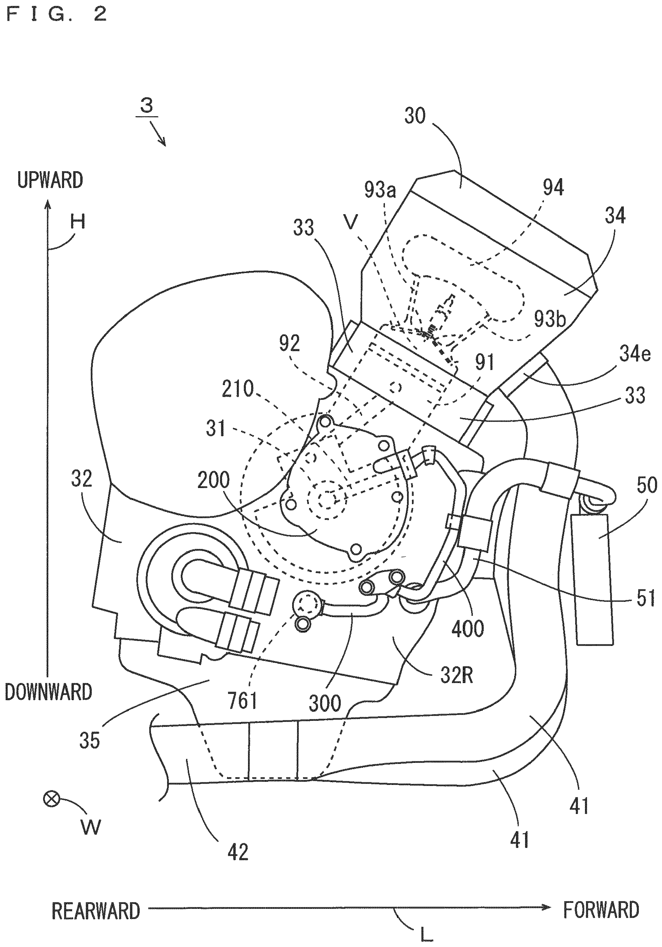

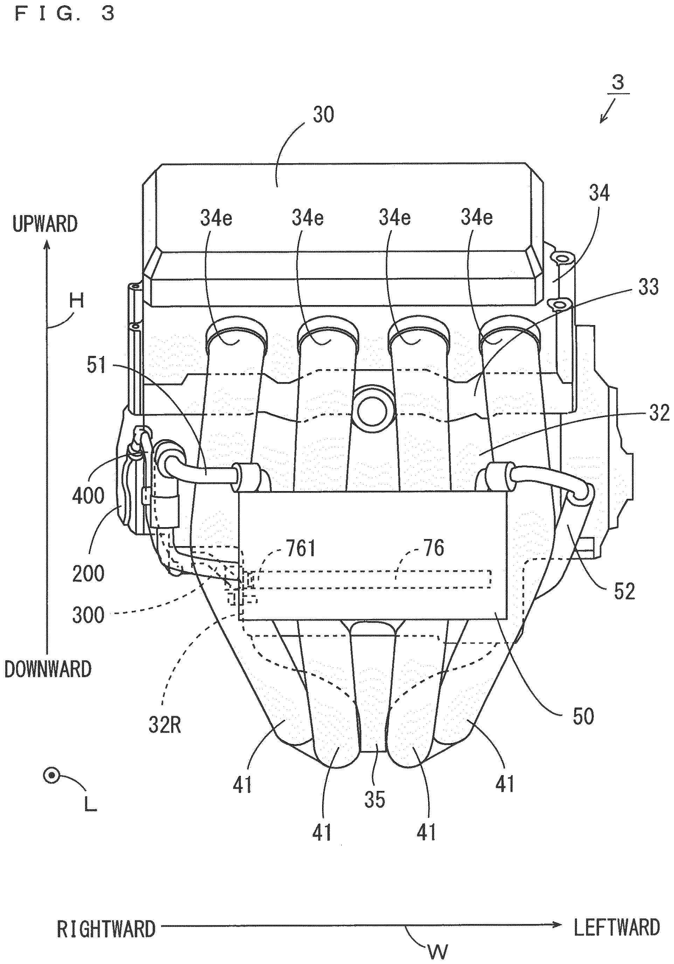

Fig. 2 is a right side view of the multi-cylinder engine 30 of Fig. 1, and Fig. 3 is a front view of the multi-cylinder engine 30 of Fig. 1. As shown in Fig. 2, the cylinder body 33 and the cylinder head 34 are provided above the crankcase 32. Further, the oil pan 35 is provided at a bottom portion of the crankcase 32.

The cylinder body 33 of the present example includes four cylinders. As shown in Fig. 2, a piston 91 is stored inside of each cylinder. In the crankcase 32, the crankshaft 31 extends in the left-and-right direction W. Further, the crankshaft 31 is rotatably supported in the crankcase 32. The piston 91 and the crankshaft 31 are coupled to each other via a connecting rod 92.

Four combustion chambers V respectively corresponding to the four cylinders of the cylinder body 33 are formed in the cylinder head 34. Further, a plurality of ignition devices, a plurality of intake valves 93a, a plurality of exhaust valves 93b, a valve mechanism 94 and the like are stored in the cylinder head 34. The valve mechanism 94 includes an intake cam, an exhaust cam and a camshaft.

The four pistons 91 respectively reciprocate in the four cylinders, and the crankshaft 31 is rotated. Further, a plurality of intake valves 93a and a plurality of exhaust valves 93b perform opening and closing operations by the valve mechanism 94. Thus, a fuel-air mixture is led to each combustion chamber V. Further, the fuel-air mixture led to the combustion chamber V is combusted by an operation of the ignition device. Further, a combusted gas is exhausted from the combustion chamber V.

As shown in Fig. 3, four exhaust ports 34e for exhausting a gas from the plurality of combustion chambers V (see Fig. 2) are formed at portions, of the cylinder head 34, directed forward. The four exhaust ports 34e are arranged in the left-and-right direction W.

The upstream ends of the plurality of exhaust pipes 41 are respectively connected to the plurality of exhaust ports 34e. The plurality of exhaust pipes 41 are arranged in the left-and-right direction W to be spaced apart from one another. Further, the plurality of exhaust pipes 41 extend downward in front of the crankcase 32 from the cylinder head 34 as shown in Fig. 2. Further, the plurality of exhaust pipes 41 are curved rearward at positions further downward than the crankcase 32 and in front of the oil pan 35.

The oil cooler 50 is provided in front of the plurality of exhaust pipes 41. As shown in Fig. 3, pipes 51, 52 are respectively connected to upper ends of both ends of the oil cooler 50. The pipes 51, 52 include metal pipes and rubber pipes.

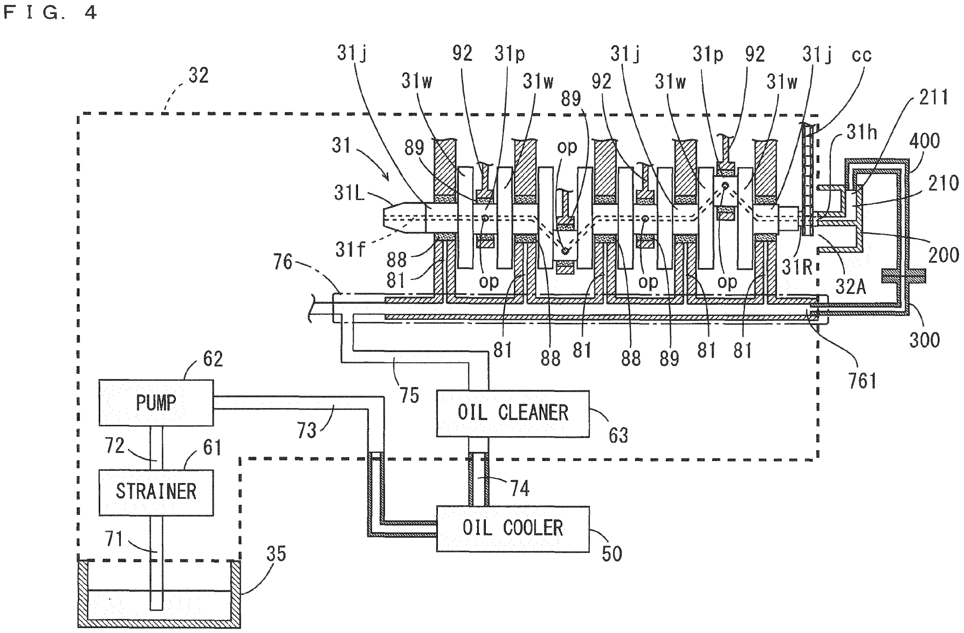

The oil flow path for supplying oil stored in the oil pan 35 (see Fig. 2) to various constituent elements is provided in the multi-cylinder engine 30. Fig. 4 is a schematic diagram showing part of the oil path provided in the multi-cylinder engine 30. In Fig. 4, the constituent elements provided in the crankcase 32 are shown in a thick dotted frame. Further, in Fig. 4, configurations of the crankshaft 31 supported in the crankcase 32 and its peripheral portions are shown in a cross sectional view.

As shown in Fig. 4, the crankshaft 31 includes a plurality of crank journals 31j, a plurality of crank webs 31w and a plurality of crank pins 31p. The crankshaft 31 of the present example has the five crank journals 31j. The pair of crank webs 31w is connected between each two adjacent crank journals 31j. The pair of crank webs 31w is coupled to each other by the one crank pin 31p.

Each crank journal 31j is supported by the crankcase 32. A bearing 88 is attached between each crank journal 31j and the crankcase 32. Further, a large end of the connecting rod 92 is coupled to each of the plurality of crank pins 31p of the above-mentioned crankshaft 31. A bearing 89 is attached between each crank pin 31p and the large end of the connecting rod 92.

In the present embodiment, one end portion 31R of the crankshaft 31 is located rightward in the crankcase 32, and the other end portion 31L is located leftward in the crankcase 32. A cam chain cc is connected to the one end portion 31R of the crankshaft 31 via a sprocket (not shown). The cam chain cc transmits rotational force of the crankshaft 31 as motive power for the valve mechanism 94 to the valve mechanism 94 (see Fig. 2). An opening 32A for performing a work of connecting the crankshaft 31 to the cam chain cc is formed at a right sidewall portion 32R of the crankcase 32 (see Fig. 2). A cover member 200 is provided to close the opening 32A. Details of the opening 32A and the cover member 200 will be described below.

Further, inside of the crankshaft 31 of the present example, an axial flow path 31f is formed from the one end portion 31R to the other end portion 31L of the crankshaft 31. The axial flow path 31f has an end opening 31h at an end surface of the one end portion 31R of the crankshaft 31. Further, the axial flow path 31f has an oil hole op in an outer peripheral surface of each crank pin 31p.

A strainer 61, a pump 62, an oil cleaner 63 and an oil gallery 76 are provided in the crankcase 32. An oil flow path 71 is provided between the oil pan 35 and the strainer 61. An oil flow path 72 is provided between the strainer 61 and the pump 62. An oil flow path 73 is provided between the pump 62 and the oil cooler 50. An oil flow path 74 is provided between the oil cooler 50 and the oil cleaner 63. An oil flow path 75 is provided between the oil cleaner 63 and the oil gallery 76.

The plurality of oil flow paths 71 to 75 and the oil gallery 76 may be formed in a wall portion of the crankcase 32 or may be constituted by another pipe separately from the crankcase 32.

As described above, in the multi-cylinder engine 30 of the present example, the oil cooler 50 is provided separately from the crankcase 32. Part of each of the oil flow paths 73, 74 is constituted by each of the pipes 51, 52 of Fig. 3.

When the pump 62 is operated, the oil stored in the oil pan 35 is led to an inlet port of the pump 62 through the oil flow path 71, the strainer 61 and the oil flow path 72. The oil led to the pump 62 is discharged from an outlet port of the pump 62 and is led to the oil gallery 76 through the oil flow path 73, the oil cooler 50, the oil flow path 74, the oil cleaner 63 and the oil flow path 75. At this time, cleanliness of the oil led to the oil gallery 76 is improved by the strainer 61 and the oil cleaner 63. Further, the oil led to the oil gallery 76 is cooled by the oil cooler 50. In the present embodiment, an air-cooled oil cooler is used as the oil cooler 50. A water-cooled oil cooler may be used as the oil cooler 50.

A plurality of bearing flow paths 81 are connected to the oil gallery 76. The plurality of bearing flow paths 81 are provided to respectively correspond to the plurality of bearings 88. Each bearing flow path 81 supplies the oil from the oil gallery 76 to the corresponding bearing 88. Thus, lubrication of the bearing 88 is performed. The oil supplied to the plurality of bearings 88 is returned to the oil pan 35.

The oil gallery 76 is formed to extend in the left-and-right direction W in the crankcase 32 (see Fig. 3). A first attachment hole 761 connecting to the oil gallery 76 is formed at the right sidewall portion 32R of the crankcase 32 (see Fig. 2). Further, an oil flow path 210 is formed at the above-mentioned cover member 200 to communicate with the axis flow path 31f of the crankshaft 31. Further, a second attachment hole 211 connecting to the oil flow path 210 is formed in the cover member 200.

A first metal pipe 300 and a second metal pipe 400 are provided to connect the first attachment hole 761 of the oil gallery 76 to the second attachment hole 211 of the cover member 200 from the outside of the crankcase 32. Thus, during an operation of the pump 62, the oil led to the oil gallery 76 is led to the first metal pipe 300, the second metal pipe 400, the oil flow path 210 and the axis flow path 31f. The oil led to the axis flow path 31f is supplied to the plurality of respective bearings 89 from the respective corresponding oil holes op formed in the plurality of crank pins 31p. Thus, the lubrication of the bearings 89 is performed. The oil supplied to the plurality of bearings 89 is returned to the oil pan 35.

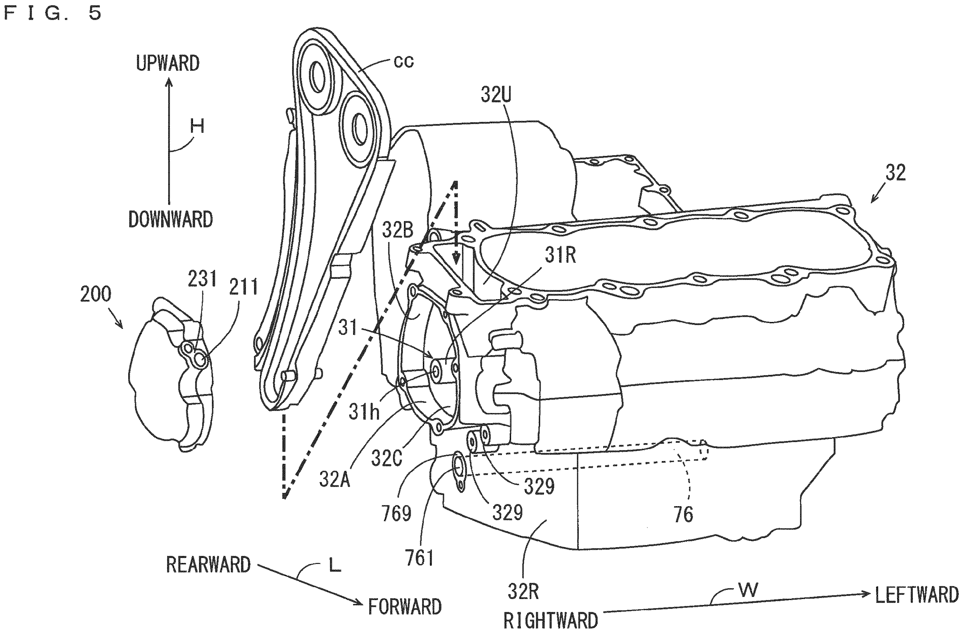

Fig. 5 is a perspective view of the crankcase 32 as obliquely viewed from the right front. As shown in Fig. 5, the opening 32A is formed in the right sidewall portion 32R of the crankcase 32. A peripheral wall portion 32B and a bottom portion 32C are formed inward of the opening 32A. The bottom portion 32C of the opening 32A is formed such that it can support the crank journal 31j (Fig. 4) located closest to the one end portion 31R of the crankshaft 31.

An insertion hole 32U reaching inward of the opening 32A is formed in an upper right portion of the crankcase 32. A lower portion of the cam chain cc is inserted into the insertion hole 32U as indicated by a thick one-dot and dash arrow in Fig. 5. In this case, the lower portion of the cam chain cc is located inward of the opening 32A of the crankcase 32. The lower portion of the cam chain cc is coupled to the one end portion 31R of the crankshaft 31. An upper portion of the cam chain cc is coupled to the valve mechanism 94 (see Fig. 2).

The cover member 200 is attached to the right sidewall portion 32R of the crankcase 32 to close the opening 32A. The end surface of the one end portion 31R of the crankshaft 31 is opposite to the cover member 200.

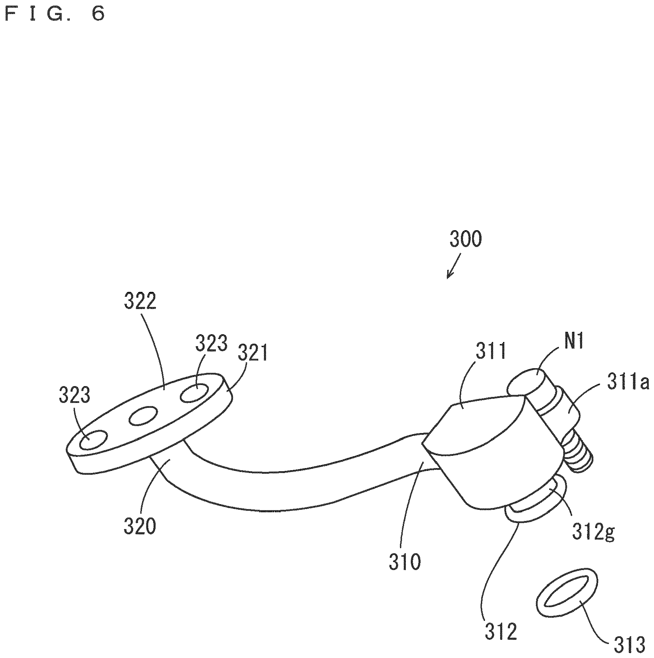

Fig. 6 is an external perspective view of the first metal pipe 300 of Fig. 4. The first metal pipe 300 has a first end portion 310 and a second end portion 320. An attachment member 311 is provided at the first end portion 310. A cylindrical insertion portion 312 that can be inserted into the first attachment hole 761 (see Fig. 4) is formed at the attachment member 311. An inner space of the insertion portion 312 communicates with the oil flow path in the first metal pipe 300. An annular groove 312g extending in a circumferential direction is formed at an outer peripheral surface of the insertion portion 312. An O-ring 313 is fitted into the groove 312g. Further, a fixing portion 311a having one through hole is formed at the attachment member 311. A screw N1 is inserted into the through hole of the fixing portion 311a. Play is provided in advance between the fixing portion 311a and the screw N1. The first metal pipe 300 is formed of aluminum, for example.

A first flange portion 321 is provided at the second end portion 320. The first flange portion 321 has a flat end surface 322 and two through holes 323.

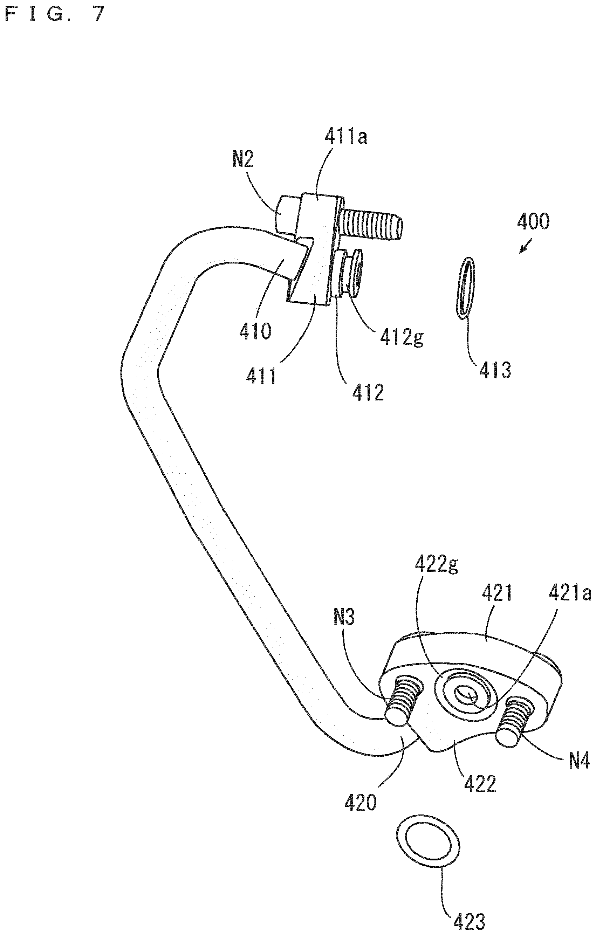

Fig. 7 is an external perspective view of the second metal pipe 400 of Fig. 4. The second metal pipe 400 has a third end portion 410 and a fourth end portion 420. An attachment member 411 is provided at the third end portion 410. A cylindrical insertion portion 412 that can be inserted into the second attachment hole 211 (see Fig. 4) is formed at the attachment member 411. An inner space of the insertion portion 412 communicates with the oil flow path in the second metal pipe 400. A groove 412g is formed at the outer peripheral surface of the insertion portion 412 in the circumferential direction. An O-ring 413 is fitted into the groove 412g. Further, a fixing portion 411a having one through hole is formed at the attachment member 411. A screw N2 is inserted into the through hole of the fixing portion 411a. Play is provided in advance between the fixing portion 411a and the screw N2. The second metal pipe 400 is formed of aluminum, for example.

A second flange portion 421 is provided at the fourth end portion 420. The second flange portion 421 has a flat end surface 422. A circular opening 421a connecting to the oil flow path in the second metal pipe 400 is provided at the end surface 422. Further, an annular groove 422g is formed at the end surface 422 to surround the opening 421a. An O-ring 423 is fitted into the groove 422g. Further, two through holes are formed at positions different from the opening 421a of the second flange portion 421. Screws N3, N4 are respectively inserted into these through holes.

As shown in Fig. 5, a base portion 231 is formed at an outer peripheral end surface of the cover member 200. A cylindrical second attachment hole 211 is formed in the base portion 231. An axial center of the second attachment hole 211 is obliquely directed forward and upward. Further, in the base portion 231, one screw hole is formed at a position close to the second attachment hole 211. The base portion 231 is used to fix the attachment member 411 of the second metal pipe 400 (see Fig. 7).

At the right sidewall portion 32R of the crankcase 32, a base portion 769 is formed at a position further downward than the opening 32A. A cylindrical first attachment hole 761 is formed in the base portion 769. An axial center of the first attachment hole 761 is directed rightward. Further, in the base portion 769, one screw hole is formed at a position close to the first attachment hole 761. The base portion 769 is used to fix the attachment member 311 of the first metal pipe 300 (see Fig. 6).

At the right sidewall portion 32R, two base portions 329 are further formed at positions in the vicinity of the opening 32A. One screw hole is formed in each of the two base portions 329. The two base portions 329 are used to fix the first and second flange portions 321, 421 (see Figs. 6 and 7).

When the first metal pipe 300 and the second metal pipe 400 are attached to the crankcase 32 and the cover member 200, the insertion portion 312 of the first metal pipe 300 of Fig. 6 is inserted into the first attachment hole 761 from the right to the left of the crankcase 32. Further, the screw N1 provided at the fixing portion 311a is attached to the screw hole of the base portion 769 to a degree at which the attachment member 311 is not completely fixed to the base portion 769. Thus, the first metal pipe 300 can be subtly rotated about a central axis of the insertion portion 312.

Further, the insertion portion 412 of the second metal pipe 400 of Fig. 7 is inserted obliquely rearward and downward into the second attachment hole 211 from a position obliquely upper front. Further, the screw N2 provided at the fixing portion 411a is attached to the screw hole of the base portion 231 to a degree at which the attachment member 411 is not completely fixed to the base portion 231. Thus, the second metal pipe 400 can be subtly rotated about a central axis of the insertion portion 412.

In this state, the first flange portion 321 and the second flange portion 421 are positioned such that the end surface 322 of the first flange portion 321 is opposite to the end surface 422 of the second flange portion 421. Further, the screws N3, N4 provided at the second flange portion 421 are respectively attached to the screw holes of the two base portions 329 through the two through holes 323 of the first flange portion 321.

Thus, the first flange portion 321 and the second flange portion 421 are fixed to the right sidewall portion 32R. In this state, the screw N1 and the screw N2 are further fastened, so that the attachment member 311 and the attachment member 411 are completely fixed to the right sidewall portion 32R and the cover member 200. In this manner, the first attachment hole 761 and the second attachment hole 211 are connected to each other by the first metal pipe 300 and the second metal pipe 400.

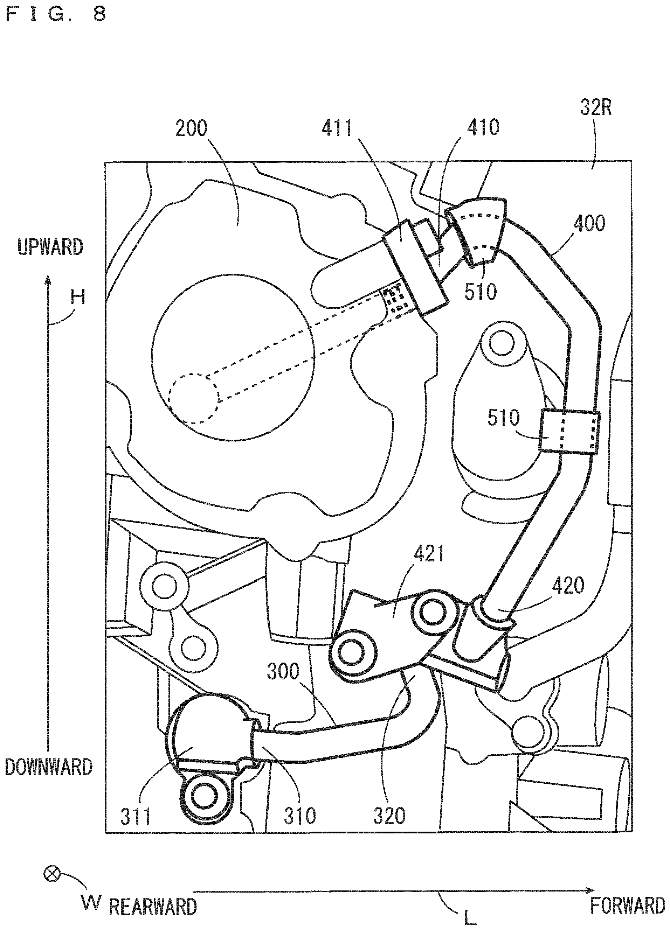

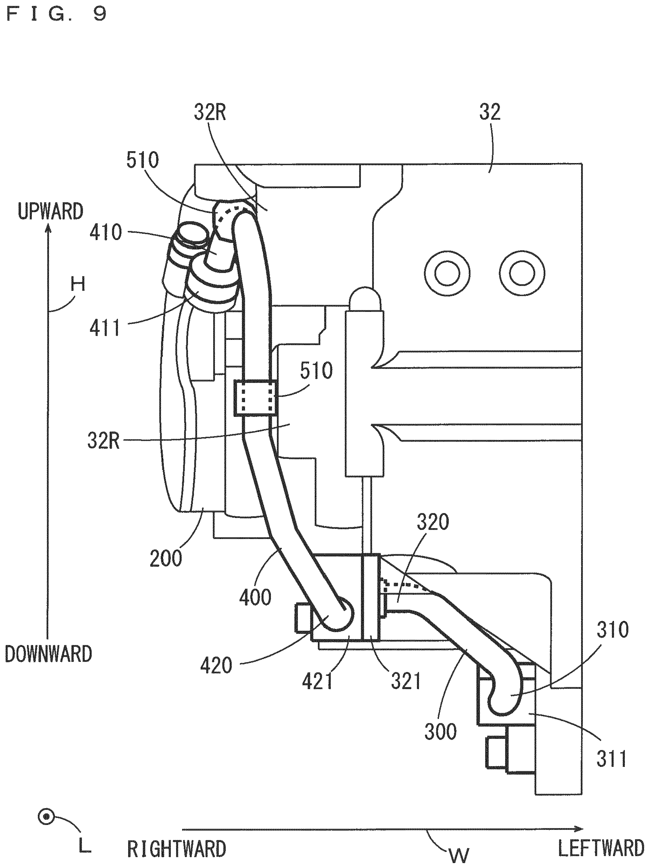

Fig. 8 is a partially enlarged right side view of the multi-cylinder engine 30 of Fig. 1. Fig. 9 is a partially enlarged front view of the multi-cylinder engine 30 of Fig. 1. In Figs. 8 and 9, configurations of the first and second metal pipes 300, 400 and their peripheral portions are shown.

In the present embodiment, a gap is provided between an outer peripheral surface, between the third end portion 410 and the fourth end portion 420 of the second metal pipe 400, and the right sidewall portion 32R.

As shown in Figs. 8 and 9, spacing members 510 are respectively fitted at two positions of the outer peripheral surface between the third end portion 410 and the fourth end portion 420 of the second metal pipe 400 to come into contact with the right sidewall portion 32R. Each spacing member 510 is formed of elastic rubber or resin.

In this case, vibration transmitted from the crankcase 32 to the second metal pipe 400 is buffered by the two spacing members 510. Thus, a stress exerted on the second metal pipe 400 by the vibration is reduced.

In the present embodiment, a gap is provided between the outer peripheral surface, between the first end portion 310 and the second end portion 320 of the first metal pipe 300, and the right sidewall portion 32R. Therefore, similarly to the example of the second metal pipe 400, the elastic spacing member 510 may also be provided for the first metal pipe 300 at the outer peripheral surface between the first end portion 310 and the second end portion 320 of the first metal pipe 300. In this case, a stress exerted on the first metal pipe 300 by the vibration is reduced.

In the multi-cylinder engine 30 according to the present embodiment, oil is led to the first attachment hole 761 in the crankcase 32. The oil led to the first attachment hole 761 is led to the second attachment hole 211 of the cover member 200 through the first and second metal pipes 300, 400. The oil led to the second attachment hole 211 is injected into the end opening 31h of the crankshaft 31 and is supplied to the axis flow path 31f inside of the crankshaft 31.

In this case, a centrifugal force is not exerted on the oil injected into the end opening 31h of the crankshaft 31. Therefore, the injection pressure of the oil into the axis flow path 31f can be reduced. Further, the first and second metal pipes 300, 400 are provided outside of the crankcase 32, so that the oil flow path is not complicated. Therefore, a pressure loss generated in the oil flowing in the oil flow path can be reduced. Therefore, the size of the pump 62 that supplies oil to the axis flow path 31f of the crankshaft 31 from the oil flow path can be reduced, and the size of the crankcase 32 can be reduced.

In the above-mentioned configuration, with the first and third end portions 310, 410 being respectively inserted into the first and second attachment holes 761, 211, the first and second flange portions 321, 421 can be respectively easily positioned such that the end surface 322 of the first flange portion 321 is opposite to the end surface 422 of the second flange portion 421. Therefore, the first and second metal pipes 300, 400 can be easily attached to the crankcase 32 and the cover member 200.

Further, the first and second metal pipes 300, 400 have sufficient strength with respect to the pressure of oil. Therefore, it is not necessary to increase the thickness of the first and second metal pipes 300, 400. Therefore, a limit of a bank angle by the first and second metal pipes 300, 400 is reduced.

As a result, an increase in size of the multi-cylinder engine 30 can be inhibited, the assembly of the multi-cylinder engine 30 can be facilitated, and the limit of the bank angle can be eased.

In the present embodiment, part of the vehicle body cover 23 of Fig. 1 is formed to be located rightward of the first metal pipe 300 and the second metal pipe 400. The part of the vehicle body cover 23 is formed close to portions directed rightward of the first metal pipe 300 and the second metal pipe 400. That is, the portions, of the vehicle body cover 23, directed rightward is formed to be located more inward in the left-and-right direction W in a vehicle front view. Thus, in the motorcycle 100, the above-mentioned effects can be acquired regardless of the vehicle body cover 23.

In the present embodiment, both of the first and second end portions 310, 320 of the first metal pipe 300 are fixed to the right sidewall portion 32R, and both of the third and fourth end portions 410, 420 of the second metal pipe 400 are fixed to the right sidewall portion 32R and the cover member 200. Thus, an attachment state of each of the first and second metal pipes 300, 400 is stabilized.

Further, the first and second metal pipes 300, 400 are formed of aluminum, so that a reduction in weight of the multi-cylinder engine 30 is realized.

In the present embodiment, the O-ring 313 is provided between the insertion portion 312 of the first metal pipe 300 and the inner surface of the first attachment hole 761. Further, the O-ring 413 is provided between the insertion portion 412 of the second metal pipe 400 and the inner surface of the second attachment hole 211. Further, the O-ring 423 is provided between the end surface 322 of the first flange portion 321 and the end surface 422 of the second flange portion 421.

Thus, liquid-tightness between the insertion portion 312 and the inner surface of the first attachment hole 761, liquid-tightness between the insertion portion 412 and the inner surface of the second attachment hole 211, and liquid-tightness between the end surface 322 of the first flange portion 321 and the end surface 422 of the second flange portion 421 can be easily ensured.

As for the right sidewall portion 32R, a configuration of connecting the end surface of the attachment member 311 to the base portion 769 without formation of the insertion portion 312 at the attachment member 311 is considered. However, such a configuration requires the base portion 769 to be formed relatively large in order to stably fix the first end portion 310 to the base portion 769. Further, in this case, more than one screw are required in order to ensure the liquid-tightness between the first end portion 310 and the base portion 769. Therefore, flexibility in layout and flexibility in design, of the base portion 769 in the right sidewall portion 32R, is limited. Further, the number of components of the multi-cylinder engine 30 increases.

In contrast, in the present embodiment, with the insertion portion 312 of the first metal pipe 300 being inserted into the first attachment hole 761 of the base portion 769, the end surface of the attachment member 311 and the base portion 769 are connected to each other. Thus, even when the base portion 769 is formed relatively small, the first end portion 310 of the first metal pipe 300 can be stably fixed to the base portion 769. Further, as described above, the fixing portion 311a can be connected to the base portion 769 using the one screw N1. Therefore, the limit of flexibility in layout and flexibility in design, of the base portion 769 in the right sidewall portion 32R is inhibited. Further, an increase in number of components of the multi-cylinder engine 30 is inhibited.

Further, with the insertion portion 412 of the second metal pipe 400 being inserted into the second attachment hole 211 of the base portion 231, the end surface of the attachment member 411 and the base portion 231 are connected to each other. Thus, even when the base portion 231 is formed relatively small, the third end portion 410 of the second metal pipe 400 can be stably fixed to the base portion 231. Further, as described above, the fixing portion 411a can be connected to the base portion 231 using the one screw N2. Therefore, limit of the flexibility in layout and flexibility in design, of the base portion 231 in the cover member 200 is inhibited. Further, an increase in number of components of the multi-cylinder engine 30 is further inhibited.

While the multi-cylinder engine 30 according to the above-mentioned embodiment is a multi-cylinder engine, the engine according to the present invention is not limited to this. A single-cylinder engine may be used instead of the multi-cylinder engine 30.

While the multi-cylinder engine 30 is a water-cooled straight four-cylinder engine in the above-mentioned embodiment, the invention is not limited to this. The multi-cylinder engine 30 only has to be water-cooled or air-cooled multi-cylinder engine and may be any one of a straight three-cylinder engine and a straight two-cylinder engine, for example.

While the vehicle body cover 23 is provided at the motorcycle 100 in the above-mentioned embodiment, the invention is not limited to this. The vehicle body cover 23 does not have to be provided at the motorcycle 100.

The plurality of bearing flow paths 81 are provided in the crankcase 23 as the configuration of respectively supplying oil to the plurality of bearings 88 in the above-mentioned embodiment. As the configuration of respectively supplying oil to the plurality of bearings 88, an oil hole connecting to the outer peripheral surface of the crank journal 31j from the axis flow path 31f may be formed in each of the plurality of crank journals 31j instead of the plurality of bearing flow paths 81 provided in the crankcase 32. In this case, the oil from the axis flow path 31f of the crankshaft 31 is supplied to the bearing 88 through the corresponding oil hole of each crank journal 31j. Thus, lubrication of the bearing 88 is performed.

In the following paragraphs, non-limiting examples of correspondences between various elements recited in the claims below and those described above with respect to various preferred embodiments of the present invention are explained.

In the above-mentioned embodiment, the first attachment hole 761 is an example of a first attachment hole, the right sidewall portion 32R is an example of a sidewall, the crankcase 32 is an example of a crankcase, the crankshaft 31 is an example of a crankshaft, the second attachment hole 211 is an example of a second attachment hole, the cover member 200 is an example of a cover member, and the oil flow paths 71 to 75 and the oil gallery 76 are examples of an oil flow path.

Further, the first end portion 310 is an example of a first end portion, the second end portion 320 is an example of a second end portion, the first metal pipe 300 is an example of a first metal pipe, the third end portion 410 is an example of a third end portion, the fourth end portion 420 is an example of a fourth end portion, and the second metal pipe 400 is an example of a second metal pipe.

Further, the first flange portion 321 is an example of a first flange portion, the second flange portion 421 is an example of a second flange portion, the end surface 322 is an example of an end surface of the first flange portion, the end surface 422 is an example of an end surface of the second flange portion, the end opening 31h is an example of an end opening, and the axis flow path 31f is an example of an axis flow path.

Further, the multi-cylinder engine 30 is an example of an engine, the spacing member 510 is an example of an elastic member, the O-ring 313 is an example of a first seal member, the O-ring 413 is an example of a second seal member, the O-ring 423 is an example of a third seal member, the rear wheel 24 is an example of a drive wheel, and the motorcycle 100 is an example of a motorcycle.

The present invention can be effectively utilized for a vehicle that tilts and advances during turning, an engine provided in the vehicle and the like.

## Claims

1. An engine (30) for a motorcycle comprising:
a crankcase (32) having a sidewall (32R) in which a first attachment hole (761) is formed;
a crankshaft (31) supported by the crankcase (32);
a cover member (200) having a second attachment hole (211) and provided at part of the sidewall (32R);
an oil flow path (76) that leads oil to the first attachment hole (761) in the crankcase (32);
a first metal pipe (300) having first (310) and second (320) end portions; and
a second metal pipe (400) having third (410) and fourth (420) end portions, wherein
a first flange portion (321) is provided at the second end portion (320) of the first metal pipe,
a second flange portion (421) is provided at the fourth end portion (420) of the second metal pipe (400),
the first attachment hole (761) and the second attachment hole (211) are directed in different directions,
the first end portion (310) of the first metal pipe (300) is inserted into the first attachment hole (761) from outside of the crankcase (32), and the third end portion (410) of the second metal pipe (400) is inserted into the second attachment hole (211) from outside of the crankcase (32),
an end surface (322) of the first flange portion (321) and an end surface (422) of the second flange portion (421) are joined to each other such that the second end portion (320) of the first metal pipe (300) and the fourth end portion (420) of the second metal pipe (400) are coupled to each other,
the crankshaft (31) has an end surface opposite to the cover member (200), an axis flow path (31f) having an end opening (31h) at the end surface is formed inside of the crankshaft (31), and the end opening (31h) is arranged such that oil led from the second attachment hole (211) is injected into the end opening (31h), and
the first flange portion (321) of the first metal pipe (300) and the second flange portion (421) of the second metal pipe (400) are fixed to the sidewall (32R) of the crankcase (32) by means other than via the first end portion (310) of the first metal pipe (300) or the third end portion (410) of the second metal pipe (400).

2. The engine (30) according to claim 1, wherein
each of the first (300) and second (400) metal pipes is provided to pass outside of the sidewall (32R) such that a gap between the sidewall (32R) of the crankcase (32) and each of the first (300) and second (400) metal pipes is formed, and
an elastic member (510) is provided at at least part of the gap.

3. The engine (30) according to any one of claims 1 to 2, wherein
the first (300) and second (400) metal pipes are formed of aluminum.

4. The engine (30) according to any one of claims 1 to 3, wherein
a first seal member (313) is provided between the first end portion (310) of the first metal pipe (300) and an inner surface of the first attachment hole (761), and
a second seal member (413) is provided between the third end portion (410) of the second metal pipe (400) and an inner surface of the second attachment hole (211).

5. The engine (30) according to any one of claims 1 to 4, wherein
a third seal member (423) is provided between an end surface (322) of the first flange portion (321) and an end surface (422) of the second flange portion (421).

6. The engine (30) according to any one of claims 1 to 5, wherein
two base portions (329) for fixing the first and second flange portions (321, 421) are formed at the sidewall (32R) of the crankcase (32),
each of the first and second flange portions (321, 421) has two through holes (323), and
a screw hole is formed in each base portion (329),
the engine (30) further comprising
two screw members (N3, N4) respectively attached to the screw holes of the two base portions (329) through the two through holes (323) of each of the first and second flange portions (321, 421).

7. A motorcycle (100) comprising:
a drive wheel (24); and
the engine according to any one of claims 1 to 6 that generates motive power for rotating the drive wheel (24).

## Patentansprüche

1. Motor (30) für ein Motorrad, der umfasst:
ein Kurbelgehäuse (32), das eine Seitenwand (32R) hat, in der ein erstes Anbringungs-Loch (761) ausgebildet ist;
eine Kurbelwelle (31), die von dem Kurbelgehäuse (32) aufgenommen wird;
ein Abdeckungs-Element (200), das ein zweites Anbringungs-Loch (211) aufweist und sich an einem Teil der Seitenwand (32R) befindet;
einen Öl-Strömungsweg (76), der Öl zu dem ersten Anbringungs-Loch (761) in dem Kurbelgehäuse (32) leitet;
ein erstes Metallrohr (300), das einen ersten End-Abschnitt (310) und einen zweiten End-Abschnitt (320) hat; sowie
ein zweites Metallrohr (400), das einen dritten End-Abschnitt (410) und einen vierten End-Abschnitt (420) hat, wobei
ein erster Flansch-Abschnitt (321) an dem zweiten End-Abschnitt (320) des ersten Metallrohrs vorhanden ist,
ein zweiter Flansch-Abschnitt (421) an dem vierten End-Abschnitt (420) des zweiten Metallrohrs (400) vorhanden ist,
das erste Anbringungs-Loch (761) und das zweite Anbringungs-Loch (211) in unterschiedlichen Richtungen verlaufen,
der erste End-Abschnitt (310) des ersten Metallrohrs (300) von außerhalb des Kurbelgehäuses (32) in das erste Anbringungs-Loch (761) eingeführt ist, und der dritte End-Abschnitt (410) des zweiten Metallrohrs (400) von außerhalb des Kurbelgehäuses (32) in das zweite Anbringungs-Loch (211) eingeführt ist,
eine Endfläche (322) des ersten Flansch-Abschnitts (321) und eine Endfläche (422) des zweiten Flansch-Abschnitts (421) so miteinander verbunden sind, dass der zweite End-Abschnitt (320) des ersten Metallrohrs (300) und der vierte End-Abschnitt (420) des zweiten Metallrohrs (400) miteinander gekoppelt sind,
die Kurbelwelle (31) eine Endfläche hat, die dem Abdeckungs-Element (200) gegenüberliegt, ein Achsen-Strömungsweg (31f), der eine End-Öffnung (31h) an der Endfläche hat, im Inneren der Kurbelwelle (31) ausgebildet ist und die End-Öffnung (31h) so angeordnet ist, dass über das zweite Anbringungs-Loch (211) geleitetes Öl in die End-Öffnung (31h) eingespritzt wird, und
der erste Flansch-Abschnitt (321) des ersten Metallrohrs (300) und der zweite Flansch-Abschnitt (421) des zweiten Metallrohrs (400) mit anderen Mitteln als über den ersten End-Abschnitt (310) des ersten Metallrohrs (300) oder den dritten End-Abschnitt (410) des zweiten Metallrohrs (400) an der Seitenwand (32R) des Kurbelgehäuses (32) befestigt sind.

2. Motor (30) nach Anspruch 1, wobei
das erste Metallrohr (300) und das zweite Metallrohr (400) jeweils so angeordnet sind, dass sie außerhalb der Seitenwand (32R) so verlaufen, dass jeweils ein Zwischenraum zwischen der Seitenwand (32R) des Kurbelgehäuses (32) und dem ersten Metallrohr (300) sowie dem zweiten Metallrohr (400) ausgebildet ist, und
ein elastisches Element (510) an wenigstens einem Teil des Zwischenraums vorhanden ist.

3. Motor (30) nach einem der Ansprüche 1 bis 2, wobei
das erste Metallrohr (300) und das zweite Metallrohr (400) aus Aluminium bestehen.

4. Motor (30) nach einem der Ansprüche 1 bis 3, wobei
ein erstes Dichtungselement (313) zwischen dem ersten End-Abschnitt (310) des ersten Metallrohrs (300) und einer Innenfläche des ersten Anbringungs-Lochs (761) vorhanden ist, und
ein zweites Dichtungselement (413) zwischen dem dritten End-Abschnitt (410) des zweiten Metallrohrs (400) und einer Innenfläche des zweiten Anbringungs-Lochs (211) vorhanden ist.

5. Motor (30) nach einem der Ansprüche 1 bis 4, wobei
ein drittes Dichtungselement (423) zwischen einer Endfläche (322) des ersten Flansch-Abschnitts (321) und einer Endfläche (422) des zweiten Flansch-Abschnitts (421) vorhanden ist.

6. Motor (30) nach einem der Ansprüche 1 bis 5, wobei
zwei Sockel-Abschnitte (329) zum Befestigen des ersten und des zweiten Flansch-Abschnitts (321, 421) an der Seitenwand (32R) des Kurbelgehäuses (32) ausgebildet sind,
der erste und der zweite Flanschabschnitt (321, 421) jeweils zwei Durchgangslöcher (323) aufweisen,
ein Schraubenloch in jedem Sockel-Abschnitt (329) ausgebildet ist, und
der Motor (30) des Weiteren umfasst:
zwei Schraubenelemente (N3, N4), die jeweils über die 2 Durchgangslöcher (323) des ersten und des zweiten Flansch-Abschnitts (321, 421) in die Schraubenlöcher der zwei Sockel-Abschnitte (329) eingeführt sind.

7. Motorrad (100), das umfasst:
ein Antriebsrad (24); und
den Motor nach einem der Ansprüche 1 bis 6, der Antriebskraft zum Drehen des Antriebsrades (24) erzeugt.

## Revendications

1. Moteur (30) pour un motocycle, comprenant :
un carter (32) comportant une paroi latérale (32R) dans laquelle est formé un premier trou d'attache (761) ;
un vilebrequin (31) supporté par le carter (32) ;
un élément de carénage (200) comportant un deuxième trou d'attache (211) et pourvu sur une partie de la paroi latérale (32R) ;
un chemin d'écoulement d'huile (76) qui conduit de l'huile au premier trou d'attache (71) dans le carter (32) ;
un premier tuyau métallique (300) comportant une première portion d'extrémité (310) et une deuxième portion d'extrémité (320) ; et
un deuxième tuyau métallique (400) comportant une troisième portion d'extrémité (410) et une quatrième portion d'extrémité (420), dans lequel
une première portion de bride (321) est pourvue sur la deuxième portion d'extrémité (320) du premier tuyau métallique,
une deuxième portion de bride (421) est pourvue sur la quatrième portion d'extrémité (420) du deuxième tuyau métallique (400),
le premier trou d'attache (761) et le deuxième trou d'attache (211) sont dirigés dans des directions différentes,
la première portion d'extrémité (310) du premier tuyau métallique (300) est insérée dans le premier trou d'attache (761) depuis l'extérieur du carter (32), et la troisième portion d'extrémité (410) du deuxième tuyau métallique (400) est insérée dans le deuxième trou d'attache (211) depuis l'extérieur du carter (32),
une surface d'extrémité (322) de la première portion de bride (321) et une surface d'extrémité (422) de la deuxième portion de bride (421) sont rattachées entre elles de telle sorte que la deuxième portion d'extrémité (320) du premier tuyau métallique (300) et la quatrième portion d'extrémité (420) du deuxième tuyau métallique (400) sont couplées entre elles,
le vilebrequin (31) comporte une surface d'extrémité opposée à l'élément de carénage (200), un chemin d'écoulement axial (31f) comportant une ouverture d'extrémité (31h) à la surface d'extrémité est formé à l'intérieur du vilebrequin (31), et l'ouverture d'extrémité (31h) est agencée de telle sorte que de l'huile provenant du deuxième trou d'attache (211) est injectée dans l'ouverture d'extrémité (31h), et
la première portion de bride (321) du premier tuyau métallique (300) et la deuxième portion de bride (421) du deuxième tuyau métallique (400) sont fixées à la paroi latérale (32R) du carter (32) à l'aide d'un autre élément que la première portion d'extrémité (310) du premier tuyau métallique (300) ou que la troisième portion d'extrémité (410) du deuxième tuyau métallique (400).

2. Moteur (30) selon la revendication 1, dans lequel chaque tuyau parmi le premier tuyau métallique (300) et le deuxième tuyau métallique (400) est pourvu de manière à passer à l'extérieur de la paroi latérale (32R) de telle sorte qu'un intervalle est formé entre la paroi latérale (32R) du carter (32) et chaque tuyau parmi le premier tuyau métallique (300) et le deuxième tuyau métallique (400), et
un élément élastique (510) est pourvu sur au moins une partie de l'intervalle.

3. Moteur (30) selon l'une quelconque des revendications 1 et 2, dans lequel
le premier tuyau métallique (300) et le deuxième tuyau métallique (400) sont formés en aluminium.

4. Moteur (30) selon l'une quelconque des revendications 1 à 3, dans lequel
un premier élément d'étanchéité (313) est pourvu entre la première portion d'extrémité (310) du premier tuyau métallique (300) et une surface interne du premier trou d'attache (761), et
un deuxième élément d'étanchéité (413) est pourvu entre la troisième portion d'extrémité (410) du deuxième tuyau métallique (400) et une surface interne du deuxième trou d'attache (211).

5. Moteur (30) selon l'une quelconque des revendications 1 à 4, dans lequel
un troisième élément d'étanchéité (423) est pourvu entre une surface d'extrémité (322) de la première portion de bride (321) et une surface d'extrémité (422) de la deuxième portion de bride (421).

6. Moteur (30) selon l'une quelconque des revendications 1 à 5, dans lequel
deux portions de base (329) pour fixer les première et deuxième portions de bride (321, 421) sont formées sur la paroi latérale (32R) du carter (32),
chacune des première et deuxième portions de bride (321, 421) comporte deux trous traversants (323), et
un trou fileté est formé dans chaque portion de base (329),
le moteur (30) comprenant en outre
deux éléments de vis (N3, N4) fixés respectivement dans les trous filetés des deux portions de base (329) à travers les deux trous traversants (323) de chacune des première et deuxième portions de bride (321, 421).

7. Motocycle (100) comprenant :
une roue motrice (24) ; et
le moteur selon l'une quelconque des revendications 1 à 6 qui génère une puissance motrice pour faire tourner la roue motrice (24).
